# EUROPEAN PATENT SPECIFICATION

(11) **EP 2 683 249 B1**
(45) Date of publication and mention of the grant of the patent: **26.11.2014**
(21) Application number: 12711253.0
(22) Date of filing: 29.02.2012
(51) Int. Cl.: A23L 3/36, A21D 17/00, A23L 1/01, F25D 17/06, A47J 37/00, A23L 3/365, F25D 11/00, F25D 31/00

(54) **METHOD FOR TREATING FOOD AND DEVICE FOR CARRYING OUT SUCH A METHOD**
VERFAHREN ZUR BEHANDLUNG VON NAHRUNGSMITTELN UND VORRICHTUNG ZUR ANWENDUNG DIESES VERFAHRENS
PROCÉDÉ POUR TRAITER UN ALIMENT ET DISPOSITIF POUR RÉALISER UN TEL PROCÉDÉ

(30) Priority: 07.03.2011 IT PD20110072
(43) Date of publication of application: 15.01.2014
(73) Proprietor: Irinox S.p.A., 31020 Corbanese di Tarzo (TV) (IT)
(72) Inventor: TONON, Claudio, 31020 Corbanese di Tarzo, Treviso (IT); DA ROS, Katiusa, 31020 Corbanese di Tarzo, Treviso (IT); GRANZIERA, Luigino, 31020 Corbanese di Tarzo, Treviso (IT)
(74) Representative: Mitola, Marco
(86) International application number: PCT/IB2012/050951
(87) International publication number: WO 2012/120410

(56) References cited:
- EP-A1- 1 806 553
- EP-A1- 1 826 515
- JP-A- 2000 220 933

## Description

### Field of application

The present invention relates to a method for treating food and a device for making such method.

The method and the device according to the invention are of particularly advantageous application in the domestic field in the thermic treatment of food requiring accurate temperature control.

Even more in particular, the method and the device according to the invention make it possible to implement thermic treatments requiring control of the humidity.

The method and the device in particular make it possible to treat and to preserve food in ideal conditions from a hygienic-health point of view, avoiding the permanence of such foods in environmental conditions favourable to the proliferation of bacteria and/or in any case favourable to loss of their nutritional and organoleptic characteristics.

### State of the art

Electric devices for the thermic treatment of food are known, in which the temperature inside the treatment chamber is controlled by regulating the activity of electric resistors depending on the values detected in the chamber by a thermic probe.

Generally temperature control envisages the on-off adjustment of the resistors. This type of adjustment does not however ensure always accurate temperature control on account of the thermic inertia of the system.

Another limit of the aforesaid traditional devices lies in the difficulty of controlling the humidity inside the chamber. This problem is especially felt for foods which must not be dried out or dehydrated during cooking. For this type of application, traditional systems may be provided with systems able to reintegrate the humidity removed in the chamber by spraying nebulised water or steam inside it.

These reintegration systems do not however permit accurate adjustment of the humidity, unless sophisticated humidity detection and control systems are implemented. In any case the risk of introducing too much humidity into the chamber and thereby altering the cooking exists.

In general, the thermic treatment devices of food described above present in any case the problem ( not yet resolved) of not permitting- at the end of cooking and in the case in which the cooked food is not immediately eaten - a preservation of the same for an indefinite time in ideal conditions from a hygienic-health point of view, avoiding the permanence of the same in environmental conditions favourable to the proliferation of bacteria and/or in any case favourable to loss of its nutritional and organoleptic characteristics.

As is known, bacterial proliferation in food and the consequent loss of its nutritional and organoleptic characteristics are favoured when the food is maintained in environments with an air temperature of 25°C to 45°C. In this temperature range bacterial proliferation is extremely rapid.

Above 45°C proliferation begins to be hindered with a substantial inhibition above 60°C. An analogous phenomenon occurs below 25°C, below which bacterial proliferation begins to be hindered, increasingly so as the temperature approaches 10°C. Below +3°C bacterial proliferation is substantially inhibited.

The aforementioned problem is particularly felt in the domestic field, given that the cooked food not destined to be eaten immediately is left to cool at room temperature before being placed in the refrigerator or freezer.

As it slowly cools the food inevitably picks up bacteria. Despite being subsequently preserved in the refrigerator or freezer, when it is eaten the food will be in a seriously jeopardised hygienic condition and will have poor or at least altered organoleptic and nutritional characteristics.

These issues can be resolved using devices able to perform rapid cooling and/or freezing of food products destined to be preserved at low temperatures, known as temperature chillers. Such devices traditionally use a powerful refrigerator system able to produce rapid cooling or freezing as far as the core of the food products, inside an insulated cell.

The refrigerator system and the cell are generally scaled to ensure the so-called "core" cooling of a food product roughly from a starting temperature of about 70°C to a temperature of about +3°C in a time of not more than 90 minutes. Similarly the refrigerator system and the cell are generally scaled to also ensure the core freezing of the same product at a temperature of about-18 °C in a time of not more than 4 hours. The installed power is therefore significantly higher than that provided in the traditional refrigerator systems destined for the preservation of chilled or frozen products.

Normally, temperature chillers are destined for use in collective catering services such as restaurants, canteens and delicatessen or patisserie facilities.

However, over the last few years the use of temperature chillers has become increasingly widespread in the domestic field too as a result of increasing awareness of the importance of preserving food correctly.

The correct use of chillers however requires the presence of an operator who, on completion of cooking, subjects the food to the effect of the chiller and then when chilling is completed places the food in a refrigerator or freezer for long term preservation.

In the field of collective catering this method of operating does not create any difficulties since it falls within routine procedures.

Diversely, in the domestic field this operating mode may frequently prove inapplicable. In fact it is increasingly common to have a lifestyle which already prevents dedicating the necessary time to the preparation of food as a result of the little time available and which would therefore be irreconcilable with the need to not only supervise the cooking of food but also its correct treatment for preservation of the same.

Refrigerators exist provided with an inner chamber also utilisable to keep cooked foods hot, in particular at temperatures of over 50°C to prevent bacterial proliferation, as described for example in the patent applications EP 1806553A1 and EP1826515A1. The heat is supplied to the chamber by electric resistors positioned inside the chamber itself. The temperature inside the chamber during thermic treatment is regulated solely by managing the resistors in on-off mode or by varying the load factor. Temperature control is not efficient however on account of the thermic inertia of the system. In addition, no control of the air humidity is envisaged.

JP200220933A discloses a refrigerator provided with a compartment which can be heated by means of a dedicated heating device. The temperature inside this compartment, when used as a warm/hot compartment, is adjusted acting on the heating device by changing the duty factor thereof.

### Presentation of the invention

Consequently, the purpose of the present invention is to eliminate the drawbacks of the prior art mentioned above, by making available a method for treating food and a device for making such method which permit accurate control of the temperature of thermic treatment.

A further purpose of the present invention is to make available a method for treating food and a device for making such method which permits accurate control of the humidity during the thermic treatment.

A further purpose of the present invention is to make available a method for treating food and a device for making such method which makes it possible to treat and to preserve food in ideal conditions from a hygienic-health point of view, avoiding the permanence of such foods in environmental conditions favourable to the proliferation of bacteria and/or in any case favourable to loss of the nutritional and organoleptic characteristics, without requiring the presence of an operator so as to adapt to the requirements for use in the domestic field.

A further purpose of the present invention is to make available a method for treating food which be implemented in a simple and immediate manner.

A further purpose of the present invention is to make available a device for implementing the method for treating food according to the invention which is simple and economical to make.

### Brief description of the drawings

The technical characteristics of the invention, according to the aforesaid purposes, can be seen clearly from the contents of the following claims and the advantages of the same will be more clearly comprehensible from the detailed description which follows, made with reference to the appended drawings, showing one or more embodiments by way of non-limiting examples, wherein:
- Figure 1 shows a perspective view of a device for treating food according to a preferred embodiment of the present invention with some parts not illustrated for a clearer view;
- Figure 2 shows a front view of the device in Figure 1 with a forced air flow affecting a treatment chamber of the food and a first technical compartment shown schematically.
- Figure 3a shows a rear perspective view of the device illustrated in Figure 1 with some parts of the support structure not shown so as to better view a second technical compartment;
- Figure 3b shows a rear perspective view of the device illustrated in Figure 1 deprived of its rear closure panel;
- Figure 4 shows a front view of the device in Figure 1 illustrated with the access door to the chamber closed;
- Figure 5 shows a cross-section view of the device illustrated in Figure 4 according to the line V-V therein indicated;
- figure 6 shows an enlargement of the detail relative to the magnetic closure means of the door, highlighted in the circle VI shown in Figure 5;
- figures 7 to 10 show the course of the air temperature over time inside the food treatment chamber during different steps of thermic treatment according to a preferred form of implementation of the method according to the invention, the figures being relative respectively to a step of cooking at low temperature, to a step of regeneration, to a raising step and to a defrosting step;
- figures 11 and 12 show the course of the air temperature over time inside the food treatment chamber during two different steps of cooling according to a preferred form of implementation of the method according to the invention, the figures being relative respectively to a rapid chilling step and a freezing step.

### Detailed description

For simplicity's sake the method of treatment will be described subsequently to the device for treating food destined in particular to perform such method.

Here and henceforth in the description and the claims "thermic treatment" will be understood as a treatment in which the food is brought to a temperature of over +10°C, preferably not less than +15°C, even more preferably not less than +55°C.

With reference to the appended drawings reference numeral 1 globally denotes a device for treating food according to the present invention.

Here and henceforth in the description and the claims, reference will be made to the device 1 in conditions of use. Any references to a lower or upper, vertical or horizontal position should therefore be understood in this sense.

According to a general embodiment of the invention, the device 1 for treating food comprises:
- a chamber 3 destined to receive the foods to be treated inside it;
- cold generating means 10 comprising a refrigerating circuit provided with at least one evaporator 11, a compressor 12 and a condenser 13;
- heat generating means 20; and
- ventilation means 30 generating a circulation of air A which affects the chamber 3, the evaporator 11 and the heat generating means 20.

The device 1 comprises a first technical compartment 4, fluidically communicating with the chamber 3, in which the heat generating means 20, the evaporator 11 and the ventilation means 30 are housed, and a second technical compartment 5 thermically insulated from the first compartment 4 and from said chamber 3, in which the compressor 12 and condenser 13 are housed. Preferably, inside the second technical compartment 5 one or more fans 14 are provided able to generate a forced circulation of external air on the condenser 13.

As will be clarified below when describing the method for treating food according to the present invention, the presence of the cold generating means 10 and of the heat generating means 20 permits accurate regulation of the temperature inside the chamber 3.

Preferably, the chamber 3 and the first technical compartment 4 form a volume hermetically closable from the outside, affected by the aforesaid air circulation A. As will be clarified below describing the method according to the present invention, this makes it possible to keep the humidity which may be released by the food during the thermic treatment inside the chamber and the first technical compartment, thereby making its redistribution on the food possible.

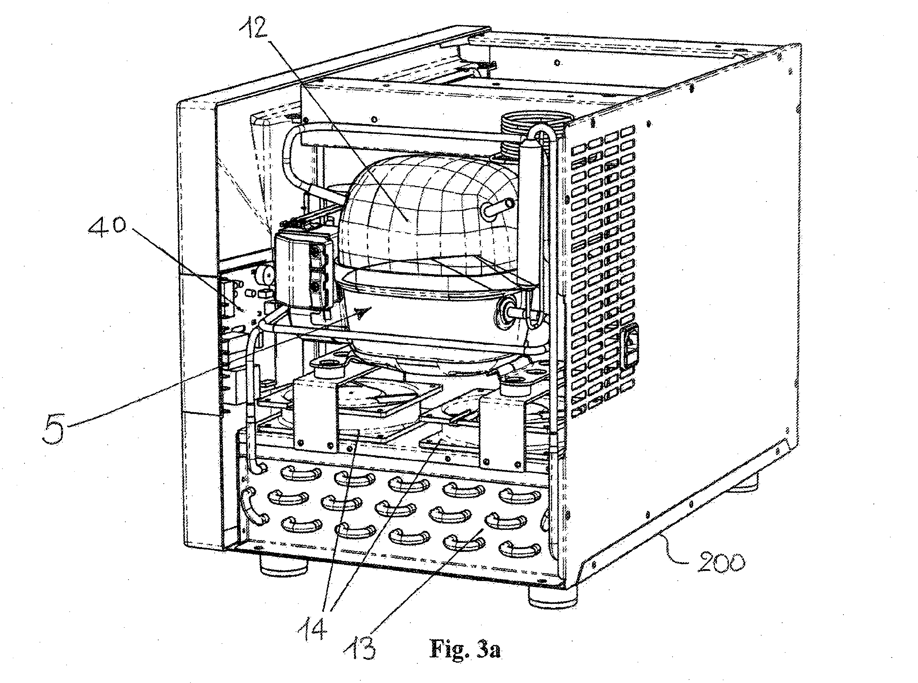

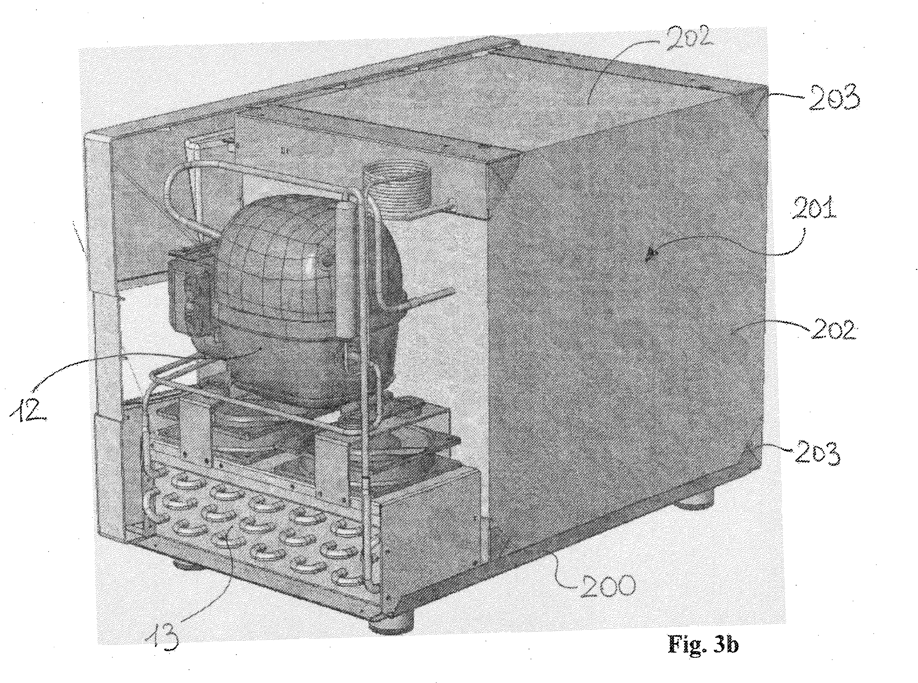

In particular, the device 1 comprises a support structure 2 partially visible in Figures 3a and 3b. In particular, the support structure comprises a support base 200 able to support a box-like containment structure 201 open on one side and formed of a plurality of insulated panels 202 connected to each other by four angular supports 203. Such box-like structure 201 defines within it the volume corresponding to the chamber 3 and to the first technical compartment 4.

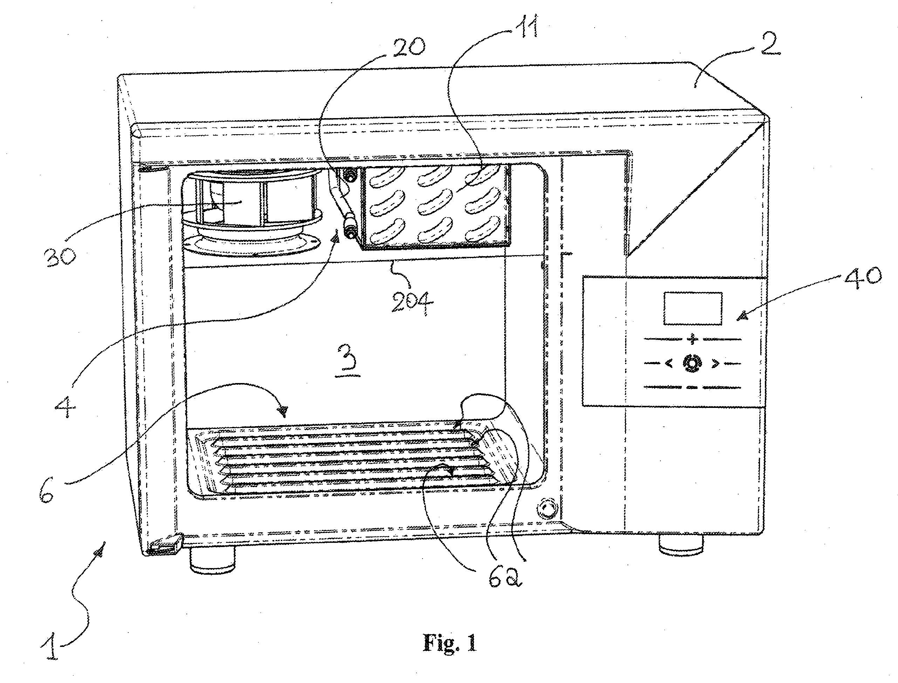

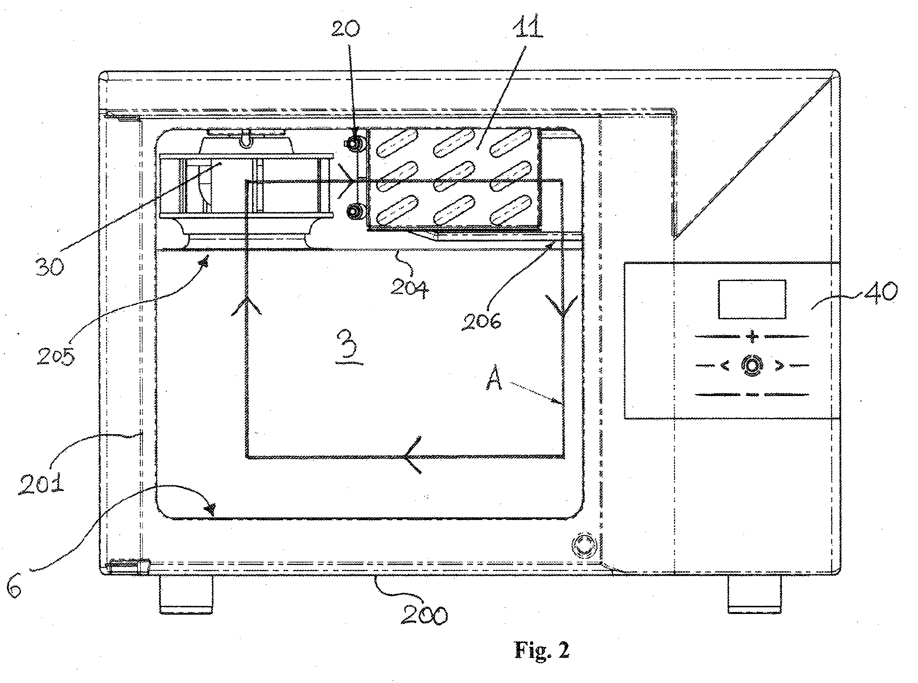

As may be observed in particular in Figures 1 and 2, the inner volume of the box-like structure 201 is divided into two parts by a dividing wall 204: a first part defines the chamber 3 and the second part defines the first technical compartment 4. At least two apertures 205 and 206 are made on such dividing wall 204 to permit the entrance of air from the chamber 3 into the first technical compartment 4 and the return of the air from the latter to the chamber 3.

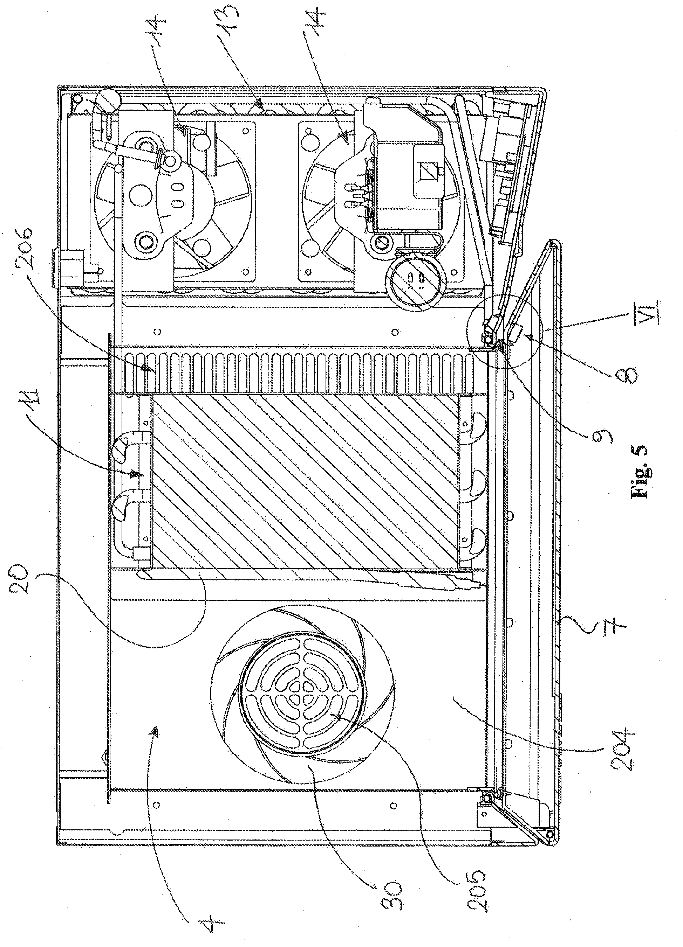

As illustrated clearly in Figure 5, the two apertures 205 and 206 are made in positions distanced from each other in such a way that the ventilation means 30 and the evaporator 11 may be placed between them and the air may traverse these two components before leaving the first technical compartment.

In particular, the ventilation means 30 comprise at least one centrifugal fan positioned at the aperture 205.

Advantageously, the device 1 comprises an access door 7 to the chamber 3 able to close the open side of the box-like structure 201 and a hermetic sealing gasket 9 positioned in the abutment zone of the door 7 on the support structure 201 of the device 1.

Preferably, the device 1 is provided with magnetic means 8 positioned opposite the hinging area of the door 7 to hold it closed and compress the gasket 9.

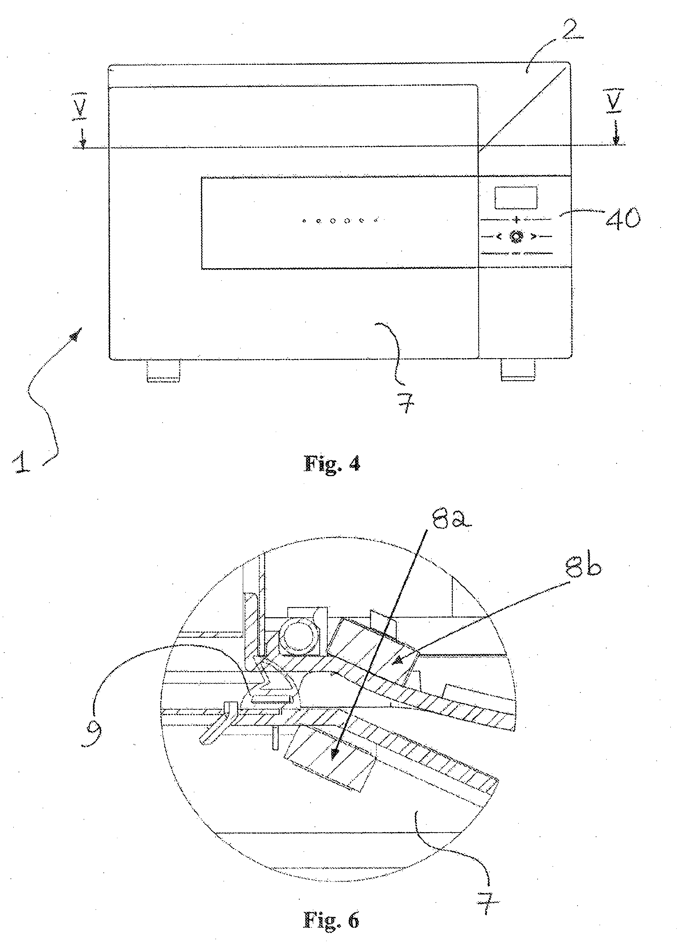

More in detail, as illustrated in Figures 5 and 6, the magnetic means 8 comprise at least two elements 8a and 8b, susceptible to reciprocal magnetic attraction, of which one 8a joined to the door 7 and one 8b joined to the support structure 2.

Advantageously, as illustrated in particular in Figures 1 and 2, the evaporator 11 is a finned tube heat exchanger and the heat generating means 20 comprise at least one resistor thermically connected to the finned tube heat exchanger. This increases the thermic exchange surface available during the heating step too, permitting a more uniform distribution of the thermic power applied and therefore a more uniform heating of the air. Localised overheatings of the air which could generate undesired temperature peaks on the food are thereby avoided.

Advantageously, as illustrated in particular in Figure 1, the chamber 3 comprises a bottom wall 6, which the foods to be treated are laid directly or indirectly on and which is traversed by a plurality of grooves 6a to enable the air A to also circulate under the foods.

Advantageously, the device 1 comprises a control unit (not shown in the appended Drawings) able to control and manage the functioning of the cold generating means, the heat generating means and the ventilation means so as in particular to automatically implement the method for treating food according to the present invention. Preferably, the device comprises a temperature probe (not shown in the appended Drawings) inside the chamber 3 and a user interface 40 to programme the control unit.

The method for treating food according to the present invention will now be described. The same reference numerals will be used for the technical elements in common with the device previously described without by so doing necessarily limiting oneself to the characteristics of said device.

According to a general form of implementation, the method for treating food according to the present invention comprises first of all an operative step a) of preparing a closed chamber 3 destined to receive the food to be treated inside it. Cold generating means 10 comprising a refrigerator circuit provided with at least one evaporator 11, heat generating means 20 and ventilation means 30 able to generate a circulation of air A affecting the chamber, the evaporator 11 and heat generating means 20, being associated with said chamber 3.

Advantageously, the method according to the invention may be implemented using in particular the device 1 for the treatment of food as described above, even though implementation is possible using other devices having the essential characteristics indicated in step a) of the method.

Again according to the aforesaid general form of implementation, the method comprises at least one step b) of thermically treating the food inside the aforesaid chamber 3 supplying heat in a controlled manner such as to keep the air temperature of the chamber 3 within a predefined value range ΔT1. The heat is supplied in a controlled manner alternating, with or without intermediate interruptions:
- sub-steps b1) of supplying heat, in which the heat generating means and ventilation means are simultaneously operative,
- sub-steps b2) of removing heat, in which the cold generating means and ventilation means are simultaneously operative, depending on the course of the real temperature in the chamber in relation to said predefined value range (ΔT1).

Diversely from what is envisaged in the prior art, the method according to the present invention permits a much more accurate regulation of the temperature inside the chamber 3 given that it permits adjustment of the thermic state not just by providing heat but also by removing heat so as to be less constrained by the thermic inertia of the system.

Operatively, the alternation of the sub-steps b1) of providing heat and the sub-steps b2) of removing heat and the duration of the single sub-steps are aimed at keeping the temperature of the chamber at least within a predefined value range for a predefined period of time.

The temperature range and the period of time can be set depending on the type of food and on the purposes of thermic treatment, as will be explained further below.

According to a preferred form of implementation, the step b) of thermic treatment comprises at least one sub-step b3) of restoring the level of humidity inside the chamber 3 by activating the ventilation means subsequently to at least one sub-step b2) of removing heat. The ventilation is aimed at removing the humidity collected on the exchange surface of the evaporator 11 during the previous step b2) of removing heat and at re-dispersing such humidity inside the chamber 3.

Preferably, the step b) of thermic treatment envisages a sequential alternation of sub-steps b1) of supplying heat, sub-steps b2) of removing heat and sub-steps b3) of restoring humidity depending on the predefined temperature value inside the chamber and the predefined treatment times of the food. Advantageously, it is therefore possible to envisage that each sub-step b2) of removing heat is always automatically followed by a sub-step b3) of restoring humidity.

Advantageously, during the sub-step b3) of restoring the level of humidity, the ventilation means are kept activated while keeping both the heat generating means and heat removing means deactivated.

According to a particularly preferred form of implementation, the chamber 3 communicates with a first technical compartment in which the heat generating means, the evaporator and the ventilation means are housed. The chamber and the first technical compartment form a hermetically closed volume affected by the air circulation A. This makes it possible to keep the humidity which may be released by the food during thermic treatment inside this hermetically closed volume (chamber 3 and first technical compartment 4) thereby permitting its complete redistribution on the food during said thermic treatment. Thanks to this method, humidity is neither added nor removed from the chamber 3. It is therefore possible to treat the food duly restoring it to a condition of equilibrium as far as the content of air humidity is concerned. The persistence of humidity gradients which tend to dry out food is thereby avoided.

This way the humidity inside the chamber need no longer be monitored. Thereby avoiding the need to adopt complex detection and control means and envisage a reintegration of the humidity, with all the associated drawbacks.

In the sub-step b3) of restoring the level of humidity the ventilation means can function continuously or at intervals.

Advantageously, the method of treatment according to the invention may comprises two or more steps b) of thermic treatment

Such two or more steps b) of thermic treatment may be conducted in a differentiated manner from each other at least as regards the temperature conditions to be maintained inside the chamber 3.

Preferably, said cooking steps b) envisage regular restoring of the level of humidity inside the chamber 3.

A step b) of thermic treatment may be conducted to cook the food.

Preferably, in such cooking step b) the air temperature in the chamber is maintained within the range of +70°C and +80°C, except for transitory transition phases. It is thus possible to use so-called low temperature cooking procedures, ideal for example for cooking beef, (veal, beef), white meats (chicken and turkey, in particular the breast, and rabbit, in particular if boned), pork, fish, in particular cephalopods (octopus, cuttlefish, white octopus and squid, after vacuum-packing), crustaceans (after vacuum-packing after removal of shells), fish in general (salmon, sea bass, gilthead seabream, etc.).

Low temperature cooking which can be achieved with the method and the device according to the present invention brings out the flavour of the food in a highly evident manner with reduced use of spices or seasoning. The tenderness for example of roast beef cooked this way bears no relation to traditional or microwave cooking inasmuch as being non-aggressive it does not remove the liquids contained in the food itself as well as ensuring accurate control of the temperature.

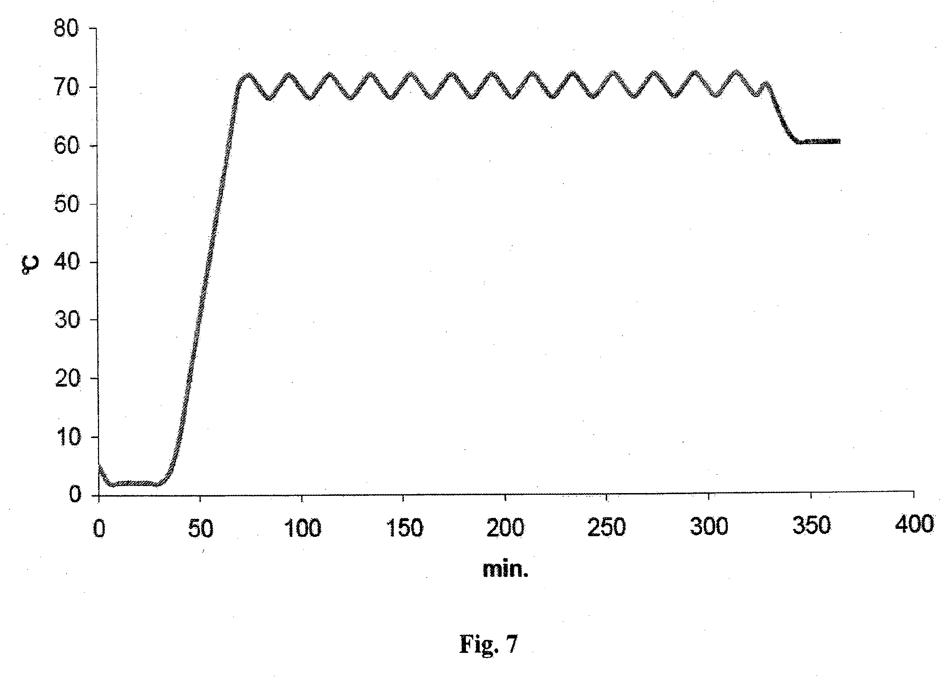

Figure 7 shows an example of the possible course of the air temperature over time inside the food treatment chamber during a step b) of low temperature cooking treatment. Excluding the transitory phase of rapid raising of the temperature (in the example shown the food was initially at a cold preservation temperature of around +2°C), in the stable phase around 70°C the oscillation reflecting the alternation of steps of providing and removing heat and restoring humidity can be seen).

A step b) of thermic treatment can be conducted to regenerate pre-cooked foods so as to restore the foods to the thermic conditions suitable for eating. The control of humidity which the present method permits implementation of, makes the regeneration (or reviving) treatment very delicate or absolutely non-aggressive, given that the temperature in the chamber can be accurately controlled (avoiding undesirable peaks) and in addition, the removal of humidity from the pre-cooked food is reduced to a minimum if not entirely cancelled.

Preferably, in such regenerative step b) the air temperature in the chamber is maintained within the range of +60°C and 70°C, and even more preferably between +65°C and + 70°C.

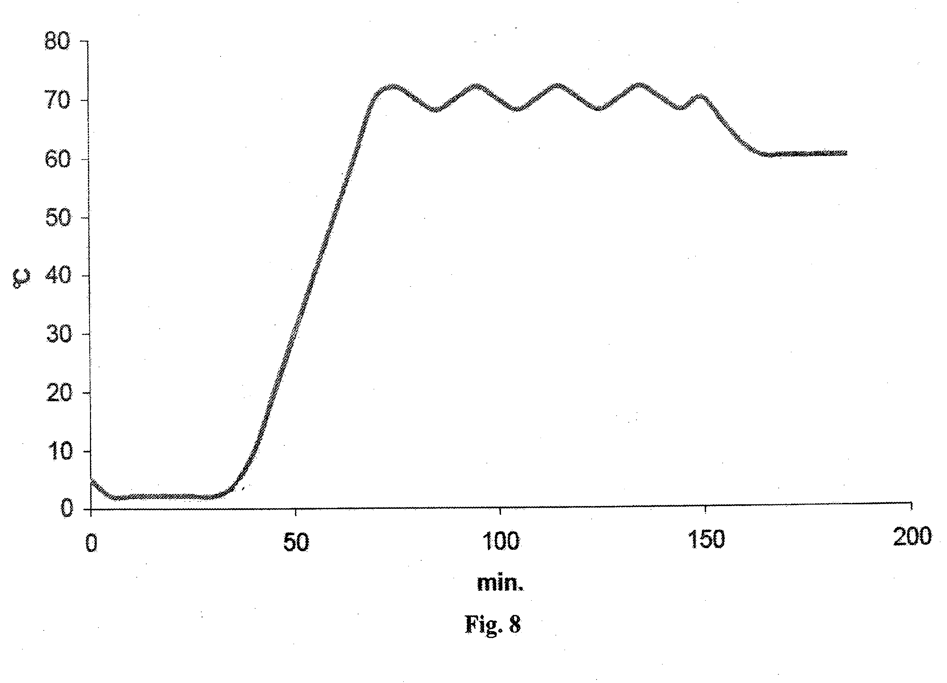

Figure 8 shows an example of the possible course of the air temperature over time inside the food treatment chamber during a step b) of regenerative treatment. Excluding the transitory phase of rapid raising of the temperature (in the example shown the food was initially at a cold preservation temperature of around +2°C), in the stable phase around 70°C the oscillation reflecting the alternation of steps of providing and removing heat and restoring humidity can be seen. In the example, the regenerative step is followed by a step of hot preservation treatment at about 60°C.

A step b) of thermic treatment can be conducted to preserve pre-cooked foods in thermic conditions suitable for eating. This step in particular could be performed without envisaging a regular restoring of the humidity inside the chamber.

Preferably, in such regenerative treatment step b) the air temperature in the chamber 3 is maintained within the range of +55°C and 65°C, and even more preferably between +60°C and + 65°C. At these temperatures and thanks to the regular restoring of humidity, it is possible to keep the food in thermic conditions suitable for eating even for indefinite periods of time, without the cooking process altering the nutritive and organoleptic properties of the pre-cooked food.

A step b) of thermic treatment may be conducted to defrost frozen or deep-frozen food. This step too preferably envisages the regular restoring of the level of humidity inside the chamber 3 so as to make the defrosting on the one hand as fast as possible and on the other as non-aggressive as possible as regards the extraction of humidity.

Preferably, in such defrosting step b) the air temperature in the chamber is maintained within the range of +15°C and +25°C.

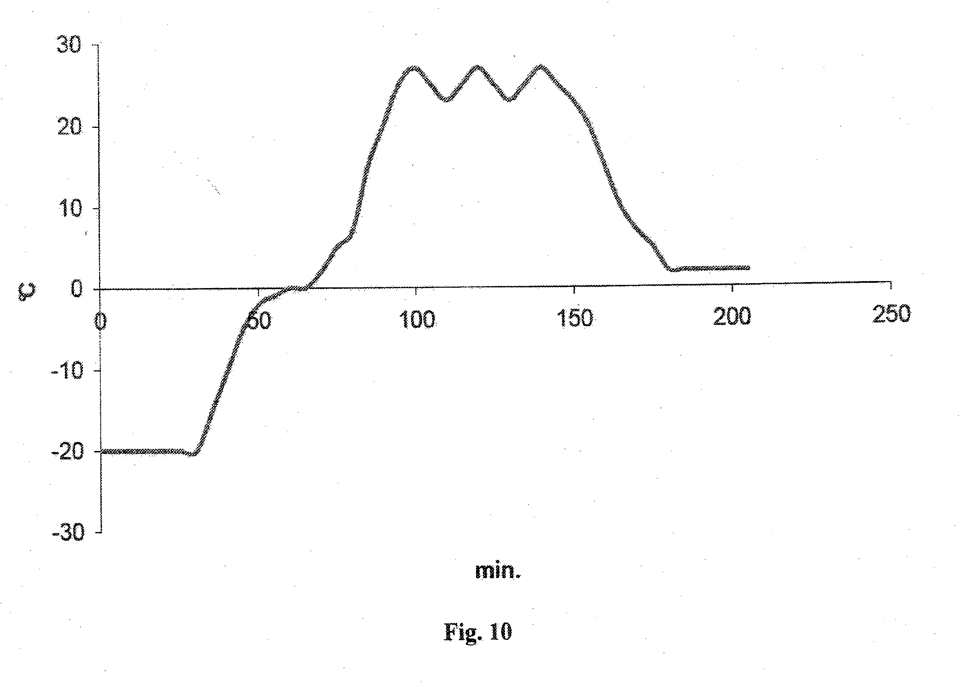

Figure 10 shows an example of the possible course of the air temperature over time inside the food treatment chamber during a defrosting step b). Excluding the transitory phase of rapid raising of the temperature (in the example the food was initially at a preservation temperature in the freezer of around -20°C), in the stable phase around 25°C the oscillation reflecting the alternation of steps of providing and removing heat and restoring humidity can be seen. In the example, the regenerative step is followed by a step of cold preservation treatment at about +2°C, using a possible operating mode which will be described further below.

The method and the device according to the invention thereby make controlled defrosting of the food possible, reaching the correct core temperature without "cooking" the food internally as happens instead for example with a microwave oven. The controlled raising of the temperature in various steps (and the regular restoring of humidity) assures a reduced loss of liquid from the food, needed during the cooking step to maintain the flavour of the product and its natural tenderness.

A step b) of thermic treatment may be conducted to raise dough. This step too preferably envisages the regular restoring of the level of humidity inside the chamber 3.

Preferably, in such raising step b) the air temperature in the chamber is maintained within the range of +20°C and +35°C, ideal for enabling the activation and action of the yeasts.

Considering the fact that raising requires controlled temperatures and humidity, the method and device according to the invention thereby permit correct raising at any time of year.

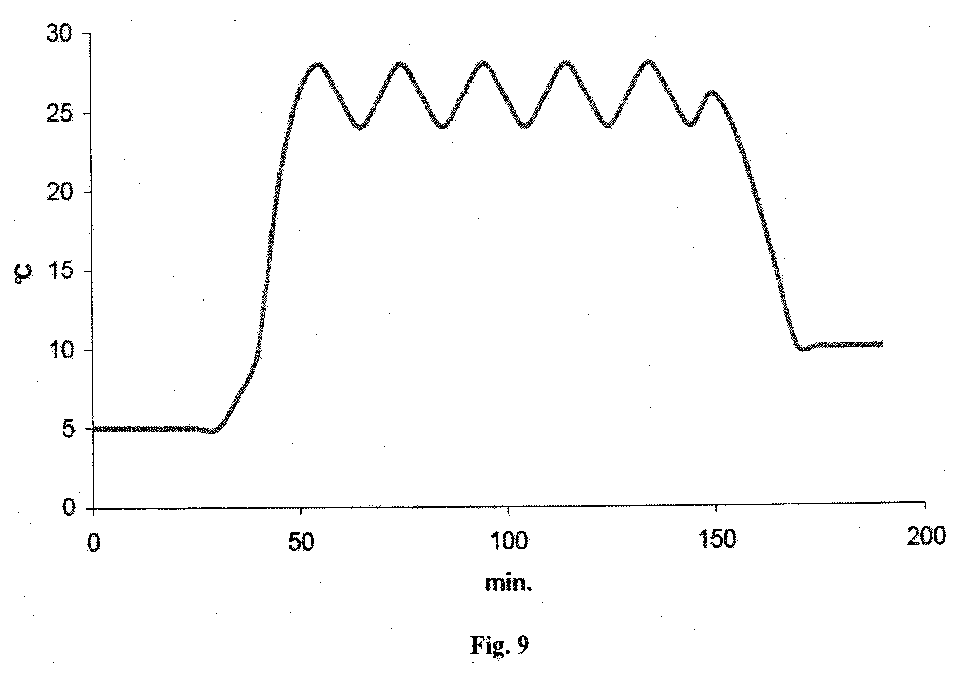

Figure 9 shows an example of the possible course of the air temperature over time inside the food treatment chamber during a raising step b). Excluding the transitory phase of rapid raising of the temperature (in the example'the food was initially at a cold preservation temperature of around +5°C), in the stable phase around 26°C the oscillation reflecting the alternation of steps of providing and removing heat and restoring humidity can be seen. In the example, the regenerative step is followed by a step of cold preservation treatment at about +10°C, using a possible operating mode which will be described further below.

According to a particularly preferred form of implementation, the method of treating food according to the invention may comprise at least one step c) of cooling the air temperature of the chamber 3 so as to bring it or keep it at temperatures of not more than +10°C, and preferably not more than +3°C. Operatively, such cooling step c) envisages activation at least of the heat removing means and of the ventilation means.

Advantageously, such at least one cooling step c) may be performed either before or after the aforesaid at least one step b) of thermic treatment, depending on the operative needs of the user.

Advantageously, as will be described further below, varied sequences and combinations of such steps b) of thermic treatment and c) of cooling may in fact be envisaged.

A cooling step c) may be conducted to keep foods which are already cold at temperatures of not more than +10°C and preferably not more than +3°C. For example, to preserve defrosted or rapidly chilled foods (as described below).

A cooling step c) may be conducted to rapidly lower the temperatures of hot foods bringing them in a short time to have core temperatures of not more +3°C.

Preferably, in such rapid chilling step c) the air temperature in the chamber is maintained within the range of -2°C and +0°C.

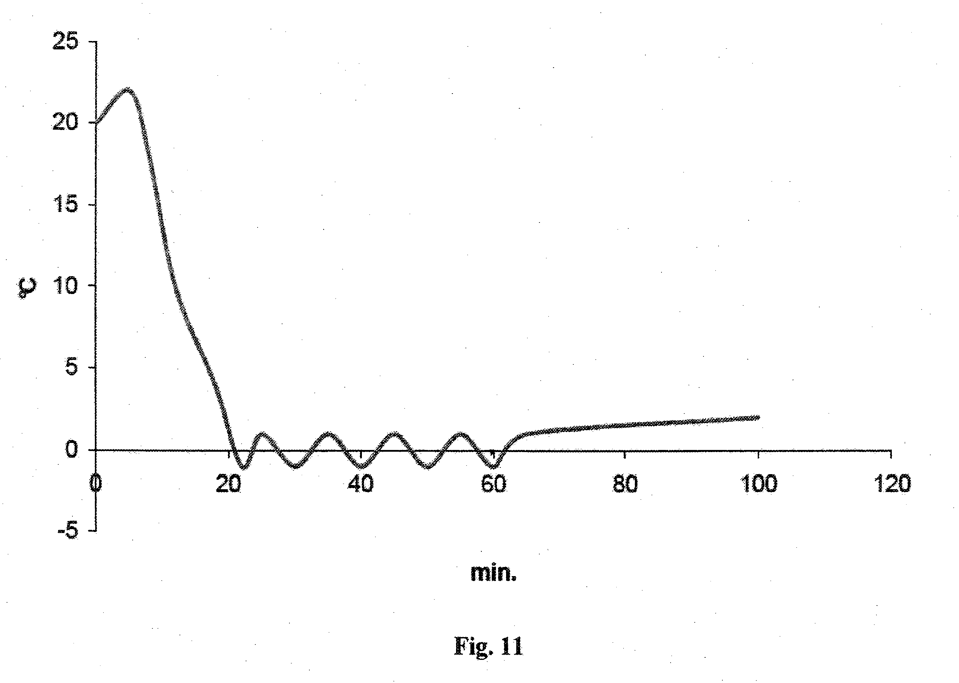

Figure 11 shows an example of the possible course of the air temperature over time inside the food treatment chamber during a rapid chilling step c). The initial transitory phase characterised by a temperature peak is related to the fact that the hot product placed in the chamber 3 (at about 70°C) raised the average air temperature, rapidly lowered by the continued intervention of the cold generating means. In the example, the rapid chilling step is followed by a step of cold preservation at about +2°C.

A cooling step c) may be conducted to freeze the food, bringing it to a temperature of not more than-18°C.

Preferably, in such freezing step b) the air temperature in the chamber is maintained within the range of -20°C and -40°C.

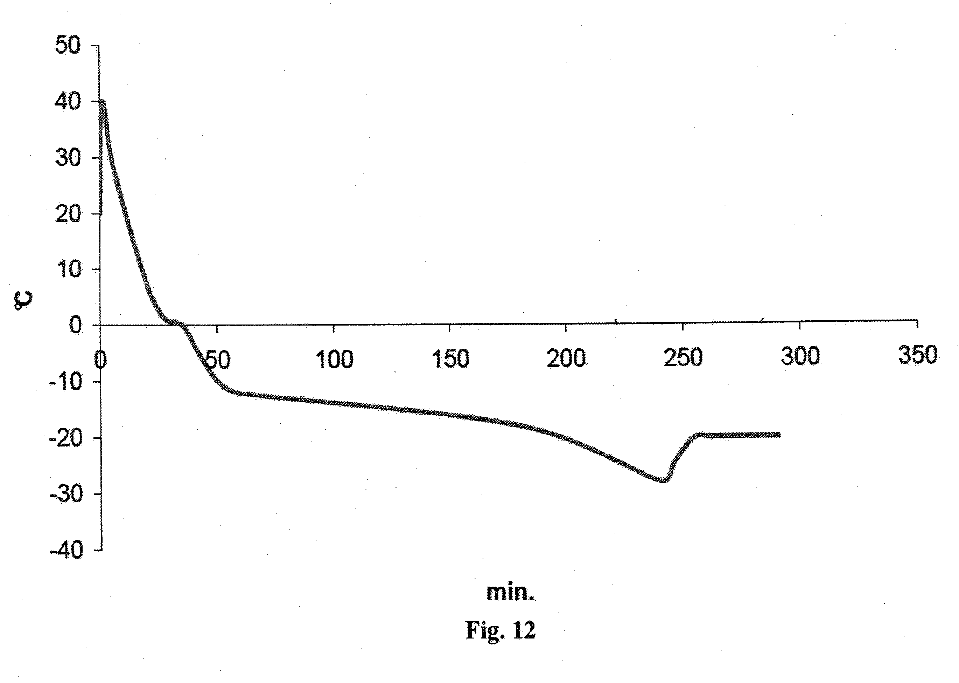

Figure 12 shows an example of the possible course of the air temperature over time inside the food treatment chamber during a freezing step c). The initial transitory phase characterised by a temperature peak is due to the initial and temporary heating of the chamber caused by the introduction of a hot food. In the example, the freezing step is followed by a step of preservation below zero at about -20°C.

Advantageously, the method of treatment according to the invention may comprises one or more cooling steps c) and one or more steps b) of thermic treatment, conducted according to a plurality of predefined and/or programmable sequences depending on predefined temperature conditions and/or time settings, in order to treat the food, preserving it inside the chamber 3 at all times in ideal conditions from a hygienic-health point of view, avoiding the permanence of the food in environmental conditions favourable to the proliferation of bacteria and/or in any case favourable to loss of the nutritional and organoleptic characteristics of the food.

The expression "permanence in environmental conditions favourable to the proliferation of bacteria and/or in any case favourable to loss of the nutritional and organoleptic characteristics" is not inclusive of any short and inevitable transitory phases in which the food and the air inside the chamber pass rapidly from the "cold safety band" (T< +10°C) to the "hot safety band" (T> +55°C).

By way of example a comparison is made between the situation occurring thanks to the invention and the situation occurring traditionally in the passage from the "hot safety band" to the "cold safety band". In the case of traditional type cooling in the refrigerator, after cooking the food is made to cool from the cooking temperature to room temperature and after being thus cooled is placed in the refrigerator. In this case the food is effectively maintained in conditions favourable to bacterial proliferation for the entire time needed to cool to room temperature (which normally takes 2-3 hours). Conversely, thanks to the invention, after cooking the food can be made to remain in the "hot safety band" (hot preservation) and/or be rapidly brought to the "cold safety band" with rapid cooling of the temperature, as shown in Figure 11, without ever coming out of the chamber 3. The food transits (and therefore at no time remains) in the non safety zone for a short transitory period, which as can be seen in Figure 1 lasts to the orders of about ten minutes. An analogous situation occurs in the opposite direction, from cold to hot, where the problem of bacterial proliferation is however not felt given that the thermic treatment eliminates any bacterial load present.

With particular reference to the aforesaid conditions of bacterial proliferation, the aforesaid one or more steps b) of thermic treatment (low temperature cooking and/or regeneration and/or defrosting and/or hot conservation) may be set to keep the air temperature inside the chamber 3 at values of not less than 55°C, preferably at values of not less than 60°C and even more preferably at values of not less than 65°C.

With particular reference to the aforesaid conditions of bacterial proliferation, the aforesaid one or more cooling steps c) (cold conservation and/or rapid chilling and/or freezing) may be set to keep the air temperature inside the chamber at values of not more than 10°C, preferably at values of not more than 5°C and even more preferably at values of not more than 3°C.

Advantageously, the temporal sequence of the steps, the duration of each single step and the temperature values correlated to each single step can be programmed by means of an electronic control unit connected to the chamber 3, to the cold generating means 10, the heat generating means 20, the ventilation means 30 and to at least one temperature probe associated with the chamber 3.

Advantageously, the method may envisage that at the end of a step b) of thermic treatment of whatever type, after a predetermined delay time Δtd and/or upon reaching a threshold temperature Tt, a cooling step c) is automatically activated, such as a step of rapid temperature chilling and subsequent cold preservation.

The advantages of application in the domestic field of the method and device according to the invention are evident from the following example. In the morning before going to work the user removes a quantity of meat from the freezer or refrigerator and puts it in the chamber 3 for cooking. The device 1 can be programmed to keep the product at a temperature of +3°C for a preset period of time (step c) of cold preservation), at the end of which the cooking step b) may begin. After a certain period of time (such as 3-4 hours) the meat is ready. The device 1 can be programmed to keep the food hot so as to be eaten immediately (step b) of hot preservation). The device may even already be programmed to rapidly chill the food to +3°C (rapid chilling step c) in the case in which for any reason the food is not removed from the chamber 3 after a preset period of time.

From the example shown it is clear how the food may in addition always be treated in ideal conditions from a hygienic-health point of view, avoiding permanence in environmental conditions favourable to the proliferation of bacteria and/or in any case favourable to loss of the nutritional and organoleptic characteristics.

The example above is purely for the purposes of illustration and non-limiting, numerous and varied combinations of cooling steps c) and thermic treatment steps b) being possible, depending on the varying needs of the user.

The invention permits numerous advantages to be achieved in part already described.

The method and the device according to the invention enable thermic treatments to be performed of food requiring accurate temperature control, and eventually control of the humidity so as to reduce the aggressiveness of food preparation.

The method and the device in particular make it possible to treat and to preserve food at all times in ideal conditions from a hygienic-health point of view, avoiding the permanence of such foods in environmental conditions favourable to the proliferation of bacteria and/or in any case favourable to loss of the nutritional and organoleptic characteristics.

The method for treating food according to the present invention can be implemented in a simple and immediate manner. In particular, humidity control proves operatively very simple to manage.

The device for treating food according to the present invention is in addition simple to construct and thereby easy and economical to produce.

The invention thus conceived achieves the predefined objectives.

Obviously in its practical form it may assume forms and configurations different from those illustrated while remaining within the present field of protection.

Moreover, all the parts may be replaced by technically equivalent elements and the dimensions, forms and materials used may be varied as needed.

## Claims

1. Method for treating food, comprising the following operating steps:
- a step a) of preparing a closed chamber destined to receive the food to be treated inside it, cold generating means comprising a refrigerator circuit provided with at least one evaporator, heat generating means and ventilation means able to generate a circulation of air affecting the chamber, the evaporator and heat generating means, being associated with said chamber;
- at least one step b) of thermically treating the food inside the chamber supplying heat in a controlled manner such as to keep the air temperature of the chamber within a predefined value range (ΔT1) over +10°C, alternating, with or without intermediate interruptions, sub-steps b1) of supplying heat, in which the heat generating means and ventilation means are simultaneously operative, with sub-steps b2) of removing heat in which the cold generating means and ventilation means are simultaneously operative, depending on the course of the real temperature in the chamber in relation to said predefined value range (ΔT1); wherein said chamber communicates with a first technical compartment which the heat generating means, the evaporator and the ventilation means are housed in, the chamber and the first technical compartment forming a hermetically closed volume affected by said air circulation.

2. Method according to claim 1, wherein said step b) of thermic treatment comprises at least one sub-step b3) of restoring the level of humidity inside the chamber by activating the ventilation means subsequently to at least one sub-step b2) of removing heat, the ventilation being aimed at removing the humidity collected on the exchange surface of the evaporator during the previous step b2) of removing heat and at re-dispersing such humidity inside the chamber.

3. Method according to claim 2, wherein during the sub-step b3) of restoring the level of humidity, the ventilation means are kept activated while;keeping both the heat generating means and heat removing means deactivated.

4. Method according to claim 2 or 3, wherein said step b) of thermic treatment envisages a sequential alternation of sub-steps b1) of supplying heat, sub-steps b2) of removing heat and sub-steps b3) of restoring humidity depending on the predefined temperature value inside the chamber and the predefined treatment times of the food.

5. Method according to one or more of the claims from 2 to 4, wherein in said sub-step b3) of restoring the level of humidity the ventilation means function continuously or at intervals.

6. Method according to one or more of the previous claims, comprising one or more steps b) of thermic treatment, it being possible to conduct said more steps b) of thermic treatment in a differentiated manner from each other at least as regards the temperature conditions to be maintained inside the chamber.

7. Method according to one or more of the previous claims, wherein a step b) of thermic treatment can be conducted to cook the foods, said step b) of cooking treatment preferably envisaging regular restoring of the level of humidity inside the chamber, in said cooking step b) the air temperature in the chamber being preferably maintained within the range of +70°C and +80°C.

8. Method according to one or more of the previous claims, wherein a step b) of treatment can be conducted to regenerate pre-cooked foods so as to restore the foods to the thermic conditions suitable for eating, said step b) of regenerative treatment preferably envisaging regular restoring of the level of humidity inside the chamber, in said regenerative step b) the air temperature in the chamber being preferably maintained within the range of +60°C to 70°C, and even more preferably of +65°C to +70°C.

9. Method according to one or more of the previous claims, wherein a step b) of treatment may be conducted to preserve pre-cooked foods in thermic conditions suitable for eating, said step b) of preservation treatment preferably envisaging regular restoring of the level of humidity inside the chamber, in said regenerative step b) the air temperature in the chamber being preferably maintained within the range of +55°C to 65°C, and even more preferably of +60°C to +65°C.

10. Method according to one or more of the previous claims, wherein a step b) of treatment may be conducted to raise dough, said step b) of raising treatment preferably envisaging regular restoring of the level of humidity inside the chamber, in said raising step b) the air temperature in the chamber being preferably maintained within the range of +20°C to 35°C.

11. Method according to one or more of the previous claims, wherein a step b) of treatment may be conducted to defrost frozen or deep-frozen foods, said step b) of defrosting treatment preferably envisaging regular restoring of the level of humidity inside the chamber, in said defrosting step b) the air temperature in the chamber being preferably maintained within the range of +15°C and +25°C.

12. Method according to one or more of the previous claims, comprising at least one step c) of cooling the air temperature of the chamber bringing it and/or keeping it at temperatures of not more than +10°C, and preferably not more than +3°C, said cooling step c) envisaging activation at least of the heat removing means and of the ventilation means.

13. Method according to claim 12, wherein a step c) of cooling may be conducted to keep foods which are already cold at temperatures of not more than +10°C and preferably not more than +3°C.

14. Method according to claim 12 or 13, wherein a step c) of cooling may be conducted to rapidly cool the temperature of hot foods, bringing them to have in a short time core temperatures not greater than +3°C, in said rapid cooling step c) the air temperature in the chamber being maintained preferably in the range of -2°C to 0°C.

15. Method according to one or more of the claims from 12 to 14, wherein a cooling step c) may be conducted to freeze foods, bringing them to temperatures not greater than -18°C, in said freezing step c) the air temperature in the chamber being maintained preferably in the range of -20°C to -40°C.

16. Method according to one or more of the claims from 12 to 15, comprising one or more steps c) of cooling and one or more steps b) of thermic treatment, conducted according to a predefined sequence, said one or more steps b) of thermic treatment being set to keep the air temperature inside the chamber at values of not less than 55°C, said one or more steps c) of cooling being set to keep the air temperature inside the chamber at values of not more than 10°C.

17. Method according to claim 16, wherein the temporal sequence of the steps, the duration of each single step and the temperature values correlated to each single step can be programmed by means of an electronic control unit connected to the chamber, to the cold generating means, the heat generating means, the ventilation means and to at least one temperature probe associated with the chamber.

18. Device for treating food, comprising:
- a chamber (3) destined to receive the food to be treated inside it;
- cold generating means (10) comprising a refrigerating circuit provided with at least one evaporator (11), a compressor (12) and a condenser (13);
- heat generating means (20); and
- ventilation means (30) generating a circulation of air (A) which affects the chamber (3), the evaporator (11) and the heat generating means (20),
said device (1) comprising a first technical compartment (4), fluidically communicating with the chamber (3), in which the heat generating means (20), the evaporator (11) and the ventilation means (30) are housed, and a second technical compartment (5) thermically insulated from said first compartment (4) and from said chamber (3) in which the compressor (12) and condenser (13) are housed; wherein said chamber (3) and said first technical compartment (4) form a hermetically closable volume, affected by said air circulation (A).

19. Device according to claim 18, wherein said evaporator (11) is a finned tube heat exchanger and said heat generating means (20) comprise at least one resistor thermically connected to said finned tube heat exchanger.

20. Device according to claim 18 or 19, wherein said chamber comprises a bottom wall (6), which the foods to be treated are laid directly or indirectly on and which is traversed by a plurality of grooves (6a) to enable the air to also circulate under the foods.

21. Device according to one or more of the claims from 18 to 20, comprising an access door (7) to the chamber (3) and a hermetic sealing gasket (9) positioned in the abutment zone of the door (7) on the structure (2) of said device, said device (1) being preferably provided with magnetic means (8) positioned opposite the hinging area of said door (7) to hold it closed and compress said gasket (9).

22. Device according to one or more of the claims from 18 to 21, comprising a control unit able to implement the method according to any of the claims from 1 to 17, said device comprising at least one temperature probe inside the chamber (3) and a user interface (40) for programming said control unit.

## Patentansprüche

1. Verfahren zur Behandlung von Lebensmitteln, die folgenden Arbeitsschritte umfassend:
- einen Schritt a) zum Bereitstellen einer geschlossenen Kammer, die dazu dient, das Lebensmittel, das in dieser behandelt werden soll, aufzunehmen, Kälteerzeugungsmittel, die einen Kühlkreislauf umfassen, der mit wenigstens einem Verdampfer versehen ist, Wärmeerzeugungsmittel und Belüftungsmittel, die eine Luftzirkulation erzeugen können, die die Kammer, den Verdampfer und die Wärmeerzeugungsmittel, die mit der Kammer verbunden sind, beeinflussen,
- wenigstens einen Schritt b) der thermischen Behandlung des Lebensmittels in der Kammer, wobei Wärme in einer geregelten Weise derart bereitgestellt wird, das die Lufttemperatur in der Kammer innerhalb eines vorbestimmten Wertebereichs (ΔT1) oberhalb von +10° hält, alternierend mit oder ohne Zwischenunterbrechungen, Zwischenschritte b1) der Wärmebereitstellung, bei denen die Wärmeerzeugungsmittel und die Belüftungsmittel gleichzeitig betrieben werden, mit Zwischenschritten b2) der Entfernung der Wärme, bei denen die Kälteerzeugungsmittel und die Belüftungsmittel abhängig von dem Verlauf der tatsächlichen Temperatur in der Kammer in Bezug auf den vorbestimmten Wertebereich (ΔT1) gleichzeitig betrieben werden,
wobei die Kammer mit einer ersten technischen Kammer, in der die Wärmeerzeugungsmittel, der Verdampfer und die Belüftungsmittel aufgenommen sind, verbunden ist, wobei die Kammer und die erste technische Kammer ein hermetisch abgeschlossenes Volumen bilden, das von der Luftzirkulation beeinflusst wird.

2. Verfahren gemäß Anspruch 1, wobei der Schritt b) der thermischen Behandlung wenigstens einen Zwischenschritt b3) der Wiederherstellung des Niveaus der Luftfeuchtigkeit in der Kammer durch Aktivieren der Belüftungsmittel anschließend an den wenigstens einen Zwischenschritt b2) des Entfernens der Wärme umfasst, wobei die Belüftung darauf ausgerichtet ist, die Luftfeuchtigkeit, die sich auf der Austauschoberfläche des Verdampfers während des vorherigen Schritts b2) des Entfernens der Wärme gesammelt hat, zu entfernen und die Wiederverteilung dieser Luftfeuchtigkeit in der Kammer auszuführen.

3. Verfahren gemäß Anspruch 2, wobei während des Zwischenschritts b3) der Wiederherstellung des Niveaus der Luftfeuchtigkeit die Belüftungsmittel aktiviert bleiben, während die Wärmeerzeugungsmittel und die Wärmeentfernungsmittel deaktiviert bleiben.

4. Verfahren gemäß Anspruch 2 oder 3, wobei der Schritt b) der thermischen Behandlung einen sequenziellen Wechsel der Zwischenschritte b1) der Wärmebereitstellung, des Zwischenschrittes b2) des Entfernens der Wärme und des Zwischenschrittes b3) der Wiederherstellung des Niveaus der Luftfeuchtigkeit abhängig von dem vorbestimmten Temperaturwert in der Kammer und den vorbestimmten Behandlungszeiten des Lebensmittels vorsieht.

5. Verfahren gemäß einem oder mehreren der Ansprüche 2 bis 4, wobei in dem Zwischenschritt b3) der Wiederherstellung des Niveaus der Luftfeuchtigkeit die Belüftungsmittel kontinuierlich oder in Intervallen betrieben werden.

6. Verfahren gemäß einem oder mehreren der vorangehenden Ansprüche, umfassend einen oder mehrere Schritte b) der thermischen Behandlung, wobei es möglich ist, die mehreren Schritte b) der thermischen Behandlung in einer sich wenigstens hinsichtlich der Temperaturzustände, die in der Kammer aufrechterhalten werden sollen, unterscheidenden Weise auszuführen.

7. Verfahren gemäß einem oder mehreren der vorangehenden Ansprüche, wobei ein Schritt b) der thermischen Behandlung ausgeführt werden kann, um die Lebensmittel zu kochen, wobei der Schritt b) der Kochbehandlung vorzugsweise eine regelmäßige Wiederherstellung des Niveaus der Luftfeuchtigkeit in der Kammer vorsieht, wobei in dem Kochschritt b) die Lufttemperatur in der Kammer vorzugsweise in dem Bereich von +70°C und +80°C gehalten wird.

8. Verfahren gemäß einem oder mehreren der vorangehenden Ansprüche, wobei ein Schritt b) der Behandlung ausgeführt werden kann, um vorgekochte Lebensmittel derart zu regenerieren, dass die Lebensmittel auf die zum Essen geeigneten thermischen Zustände zurückgeführt werden, wobei der Schritt b) der regenerativen Behandlung vorzugsweise eine regelmäßige Wiederherstellung des Niveaus der Luftfeuchtigkeit in der Kammer vorsieht und wobei in dem regenerativen Schritt b) die Lufttemperatur in der Kammer vorzugsweise in dem Bereich von +60°C bis 70°C und besonders vorzugsweise von +65°C bis +70°C gehalten wird.

9. Verfahren gemäß einem oder mehreren der vorangehenden Ansprüche, wobei ein Schritt b) der Behandlung ausgeführt werden kann, um die vorgekochten Lebensmittel in zum Essen geeigneten thermischen Zuständen zu konservieren, wobei der Schritt b) der Konservierungsbehandlung vorzugsweise eine regelmäßige Wiederherstellung der Höhe der Luftfeuchtigkeit in der Kammer vorsieht und wobei in dem regenerativen Schritt b) die Lufttemperatur in der Kammer vorzugsweise in dem Bereich von +55°C und +65°C und besonders vorzugsweise von +60°C bis +65°C erhalten bleibt.

10. Verfahren gemäß einem oder mehreren der vorangehenden Ansprüche, wobei ein Schritt b) der Behandlung ausgeführt werden kann, um einen Teig gehen zu lassen, wobei der Schritt b) des Gehenlassens vorzugsweise eine regelmäßige Wiederherstellung des Niveaus der Luftfeuchtigkeit in der Kammer vorsieht, und wobei bei dem Schritt b) des Gehenlassens die Lufttemperatur in der Kammer vorzugsweise in dem Bereich von +20°C bis +35°C gehalten wird.

11. Verfahren gemäß einem oder mehreren der vorangehenden Ansprüche, wobei ein Schritt b) der Behandlung ausgeführt werden kann, um gefrorene oder tiefgefrorene Lebensmittel aufzutauen, wobei der Schritt b) des Auftauens vorzugsweise eine regelmäßige Wiederherstellung des Niveaus der Luftfeuchtigkeit in der Kammer vorsieht, und wobei bei dem Schritt b) des Auftauens die Lufttemperatur in der Kammer vorzugsweise in dem Bereich von +15°C und +25°C gehalten wird.

12. Verfahren gemäß einem oder mehreren der vorangehenden Ansprüche, umfassend wenigstens einen Schritt c) des Abkühlens der Lufttemperatur der Kammer und/oder Halten dieser auf nicht mehr als +10°C und vorzugsweise nicht mehr als +3°C vorsieht, wobei der Kühlschritt c) das Aktivieren wenigstens der Wärmeentfernungsmittel und der Belüftungsmittel in Betracht zieht.

13. Verfahren gemäß Anspruch 12, wobei ein Schritt c) des Kühlens ausgeführt werden kann, um die Lebensmittel, die schon kalt sind, auf Temperaturen von nicht mehr als +10°C und insbesondere nicht mehr als +3°C zu halten.

14. Verfahren gemäß Anspruch 12 oder 13, wobei ein Schritt c) des Kühlens ausgeführt werden kann, um die Temperatur von heißen Lebensmitteln schnell abzukühlen, und sie in einer kurzen Zeit auf Kerntemperaturen von nicht mehr als +3° zu bringen, wobei der schnelle Abkühlschritt c) die Lufttemperatur in der Kammer vorzugsweise in dem Bereich von -2°C bis 0°C hält.

15. Verfahren gemäß einem oder mehreren Ansprüchen von 12 bis 14, wobei ein Kühlschritt c) ausgeführt werden kann, um Lebensmittel zu gefrieren, und diese auf Temperaturen von nicht mehr als -18°C zu bringen, wobei in dem Gefrierschritt c) die Lufttemperatur in der Kammer vorzugsweise in dem Bereich von -20°C bis -40°C gehalten wird.

16. Verfahren gemäß einem oder mehreren der Ansprüche 12 bis 15, umfassend einen oder mehrere Kühlschritte c) und einen oder mehrere Schritte b) der thermischen Behandlung, die gemäß einer vorbestimmten Reihenfolge ausgeführt werden, wobei der eine oder die mehreren Schritte b) der thermischen Behandlung festgelegt werden, um die Lufttemperatur in der Kammer auf Werte von nicht weniger als 55°C zu halten und wobei der eine oder die mehreren Kühlschritte c) festgelegt werden, um die Lufttemperatur in der Kammer auf Werte von nicht mehr als 10°C zu halten.

17. Verfahren gemäß Anspruch 16, wobei die zeitliche Abfolge der Schritte, die Länge jedes einzelnen Schritts und die Temperatur, die zu jedem einzelnen Schritt gehören, mittels einer elektronischen Steuereinheit programmiert werden können, die mit der Kammer, den Kälteerzeugungsmitteln, den Wärmeerzeugungsmitteln, den Belüftungsmitteln und wenigstens einem Temperaturfühler, der mit der Kammer assoziiert ist, verbunden ist.

18. Vorrichtung zur Behandlung von Lebensmitteln umfassend:
- eine Kammer (3), die zur Aufnahme des zu behandelnden Lebensmittels dient,
- Kälteerzeugungsmittel (10), die einen Kühlkreislauf umfassen, der wenigstens mit einem Verdampfer (11), einem Kompressor (12) und einem Kondensator (13) versehen ist,
- Wärmeerzeugungsmittel (20), und
- Belüftungsmittel (30), die eine Luftzirkulation (A), die die Kammer (3), den Verdampfer (11) und die Wärmeerzeugungsmittel (20) beeinflusst, erzeugen,
wobei die Vorrichtung (1) eine erste technische Kammer (4), die mit der Kammer (3) strömungstechnisch in Verbindung steht und in der die Wärmeerzeugungsmittel (20), der Verdampfer (11) und die Belüftungsmittel (30) aufgenommen sind, und eine zweite technische Kammer (5), die von der ersten Kammer (4) und der Kammer (3) thermisch isoliert ist und in der der Kompressor (12) und der Dampfkondensator aufgenommen sind,
wobei die Kammer (3) und die erste technische Kammer (4) ein hermetisch abschließbares Volumen bilden, das von der Luftzirkulation (A) beeinflusst wird.

19. Vorrichtung gemäß Anspruch 18, wobei der Verdampfer (11) ein Rippenrohr-Wärmetauscher ist und die Wärmerzeugungsmittel (20) wenigstens einen Widerstand umfassen, der mit dem Rippenrohr-Wärmetauscher thermisch verbunden ist.

20. Vorrichtung gemäß Anspruch 18 oder 19, wobei die Kammer eine Bodenwand (6) umfasst, auf die die zu behandelnden Lebensmittel direkt oder indirekt gelegt werden und die von einer Mehrzahl von Nuten (6a) durchquert wird, um zu ermöglichen, dass die Luft auch unter den Lebensmitteln zirkulieren kann.

21. Vorrichtung gemäß einem oder mehreren Ansprüchen 18 bis 20, umfassend eine Zugangstür (7) zu der Kammer (3) und eine hermetische Dichtung (9), die in dem Anlagebereich der Tür (7) auf dem Aufbau (2) der Vorrichtung positioniert ist, wobei die Vorrichtung (1) vorzugsweise mit magnetischen Mitteln (8) versehen ist, die gegenüberliegend zum Scharnierbereich der Tür (7) angeordnet sind, um die Tür (7) geschlossen zu halten und die Dichtung (9) zusammenzudrücken.

22. Vorrichtung gemäß einem oder mehreren Ansprüchen 18 bis 21, wobei die Vorrichtung wenigstens einen Temperaturfühler in der Kammer und eine Benutzeroberfläche (40) zum Programmieren der Steuereinheit umfasst.

## Revendications

1. Procédé pour traiter un aliment, comprenant les étapes opérationnelles suivantes :
- une étape a) consistant à préparer une chambre fermée destinée à recevoir l'aliment à traiter à l'intérieur de cette dernière, des moyens de génération de froid comprenant un circuit de réfrigération prévu avec au moins un évaporateur, des moyens de génération de chaleur et des moyens de ventilation pouvant générer une circulation d'air ayant un effet sur la chambre, l'évaporateur et les moyens de génération de chaleur, étant associés avec ladite chambre ;
- au moins une étape b) consistant à traiter thermiquement l'aliment à l'intérieur de la chambre fournissant la chaleur d'une manière contrôlée afin de maintenir la température de l'air de la chambre dans une plage de valeurs prédéfinie (ΔT1) supérieure à +10°C, alternant avec ou sans interruptions intermédiaires, des sous-étapes b1) consistant à fournir de la chaleur, dans lesquelles les moyens de génération de chaleur et les moyens de ventilation fonctionnent simultanément, avec les sous-étapes b2) consistant à extraire la chaleur, dans lesquelles les moyens de génération de froid et les moyens de ventilation fonctionnent simultanément, en fonction du parcours de la température réelle dans la chambre par rapport à ladite plage de valeur prédéfinie (ΔT1) ;
dans lequel ladite chambre communique avec un premier compartiment technique dans lequel les moyens de génération de chaleur, l'évaporateur et les moyens de ventilation sont logés, la chambre et le premier compartiment technique formant un volume hermétiquement clos affecté par ladite circulation d'air.

2. Procédé selon la revendication 1, dans lequel ladite étape b) de traitement thermique comprend au moins une sous-étape b3) consistant à rétablir le niveau d'humidité à l'intérieur de la chambre en activant les moyens de ventilation suite à la au moins une sous-étape b2) consistant à extraire la chaleur, la ventilation ayant pour but d'extraire l'humidité collectée sur la surface d'échange de l'évaporateur pendant la précédente étape b2) consistant à extraire la chaleur et à disperser à nouveau une telle humidité à l'intérieur de la chambre.

3. Procédé selon la revendication 2, dans lequel pendant la sous-étape b3) consistant à rétablir le niveau d'humidité, les moyens de ventilation sont maintenus activés tout en maintenant à la fois les moyens de génération de chaleur et les moyens d'extraction de chaleur désactivés.

4. Procédé selon la revendication 2 ou 3, dans lequel ladite étape b) de traitement thermique envisage une alternance séquentielle des sous-étapes b1) consistant à fournir la chaleur, des sous-étapes b2) consistant à extraire la chaleur et des sous-étapes b3) consistant à rétablir l'humidité en fonction de la valeur de température prédéfinie à l'intérieur de la chambre et des temps de traitement prédéfinis de l'aliment.

5. Procédé selon une ou plusieurs des revendications 2 à 4, dans lequel à ladite sous-étape b3) consistant à rétablir le niveau d'humidité, les moyens de ventilation fonctionnent en continu ou à intervalles.

6. Procédé selon une ou plusieurs des revendications précédentes, comprenant une ou plusieurs étapes b) de traitement thermique, il est possible de réaliser lesdites plusieurs étapes b) de traitement thermique d'une manière différenciée les unes des autres au moins en ce qui concerne les conditions de température à maintenir à l'intérieur de la chambre.

7. Procédé selon une ou plusieurs des revendications précédentes, dans lequel une étape b) de traitement thermique peut être réalisée pour faire cuire les aliments, ladite étape b) de traitement de cuisson envisageant de préférence le rétablissement régulier du niveau d'humidité à l'intérieur de la chambre, à ladite étape de cuisson b), la température de l'air dans la chambre étant de préférence maintenue dans la plage de +70°C et +80°C.

8. Procédé selon une ou plusieurs des revendications précédentes, dans lequel une étape b) de traitement peut être réalisée pour régénérer des aliments précuits afin de ramener les aliments aux conditions thermiques appropriées pour manger, ladite étape b) de traitement de régénération envisageant de préférence le rétablissement régulier du niveau d'humidité à l'intérieur de la chambre, à ladite étape de régénération b), la température de l'air dans la chambre étant de préférence maintenue dans la plage de +60°C à 70°C, et encore de préférence de +65°C à +70°C.

9. Procédé selon une ou plusieurs des revendications précédentes, dans lequel une étape b) de traitement peut être réalisée pour conserver des aliments précuits dans des conditions thermiques appropriées pour manger, ladite étape b) de traitement de conservation envisageant de préférence le rétablissement régulier du niveau d'humidité à l'intérieur de la chambre, à ladite étape de régénération b), la température de l'air dans la chambre étant de préférence maintenue dans la plage de +55°C à 65°C, et encore de préférence de +60°C à +65°C.

10. Procédé selon une ou plusieurs des revendications précédentes, dans lequel une étape b) de traitement peut être réalisée pour faire lever la pâte, ladite étape b) de traitement de levage envisageant de préférence le rétablissement régulier du niveau d'humidité à l'intérieur de la chambre, à ladite étape de levage b), la température de l'air dans la chambre étant de préférence maintenue dans la plage de +20°C à 35°C.

11. Procédé selon une ou plusieurs des revendications précédentes, dans lequel une étape b) de traitement peut être réalisée pour dégeler des produits surgelés ou congelés, ladite étape b) de traitement de décongélation envisageant de préférence le rétablissement régulier du niveau d'humidité à l'intérieur de la chambre, à ladite étape de décongélation b), la température de l'air dans la chambre étant de préférence maintenue dans la plage de +15°C et +25°C.

12. Procédé selon une ou plusieurs des revendications précédentes, comprenant au moins une étape c) consistant à refroidir la température de l'air de la chambre en l'amenant et/ou en le maintenant à des températures non supérieures à +10°C, et de préférence non supérieures à +3°C, ladite étape de refroidissement c) envisageant l'activation au moins des moyens d'extraction de chaleur et des moyens de ventilation.

13. Procédé selon la revendication 12, dans lequel une étape c) de refroidissement peut être réalisée pour maintenir les aliments qui sont déjà froids à des températures non supérieures à +10°C et de préférence non supérieures à +3°C.

14. Procédé selon la revendication 12 ou 13, dans lequel une étape c) de refroidissement peut être réalisée pour refroidir rapidement la température des aliments chauds, les amenant à avoir, dans un court laps de temps, des températures de coeur non supérieures à +3°C, à ladite étape de refroidissement rapide c), la température de l'air dans la chambre étant maintenue de préférence dans la plage de -2°C à 0°C.

15. Procédé selon une ou plusieurs des revendications 12 à 14, dans lequel une étape de refroidissement c) peut être réalisée pour congeler des aliments, en les amenant à des températures non supérieures à -18°C, à ladite étape de congélation c), la température de l'air dans la chambre étant maintenue de préférence dans la plage de-20°C à -40°C.

16. Procédé selon une ou plusieurs des revendications 12 à 15, comprenant une ou plusieurs des étapes c) de refroidissement et une ou plusieurs des étapes b) de traitement thermique, réalisées selon une séquence prédéfinie, lesdites une ou plusieurs étapes b) de traitement thermique étant déterminées pour maintenir la température de l'air à l'intérieur de la chambre à des valeurs non inférieures à 55°C, lesdites une ou plusieurs étapes c) de refroidissement étant déterminées pour maintenir la température de l'air à l'intérieur de la chambre à des valeurs non supérieures à 10°C.

17. Procédé selon la revendication 16, dans lequel la séquence temporelle des étapes, la durée de chaque étape individuelle et les valeurs de température corrélées à chaque étape individuelle peuvent être programmées au moyen d'une unité de commande électronique raccordée à la chambre, aux moyens de génération de froid, aux moyens de génération de chaleur, aux moyens de ventilation et à au moins une sonde de température associée à la chambre.

18. Dispositif pour traiter un aliment, comprenant :
- une chambre (3) destinée à recevoir l'aliment pour être traité à l'intérieur de cette dernière ;
- des moyens de génération de froid (10) comprenant un circuit de réfrigération prévu avec au moins un évaporateur (11), un compresseur (12) et un condenseur (13) ;
- des moyens de génération de chaleur (20) ; et
- des moyens de ventilation (30) générant une circulation d'air (A) qui a un effet sur la chambre (3), l'évaporateur (11) et les moyens de génération de chaleur (20),
ledit dispositif (1) comprenant un premier compartiment technique (4) se raccordant de manière fluidique avec la chambre (3), dans laquelle les moyens de génération de chaleur (20), l'évaporateur (11) et les moyens de ventilation (30) sont logés, et un second compartiment technique (5) thermiquement isolé dudit premier compartiment (4) et de ladite chambre (3) dans laquelle le compresseur (12) et le condenseur (13) sont logés ; dans lequel ladite chambre (3) et ledit premier compartiment technique (4) forment un volume pouvant être hermétiquement clos, affecté par ladite circulation d'air (A).

19. Dispositif selon la revendication 18, dans lequel ledit évaporateur (11) est un échangeur de chaleur à tubes à ailettes et lesdits moyens de génération de chaleur (20) comprennent au moins une résistance thermiquement raccordée audit échangeur de chaleur à tubes à ailettes.

20. Dispositif selon la revendication 18 ou 19, dans lequel ladite chambre comprend une paroi inférieure (6) sur laquelle les aliments à traiter sont posés directement ou indirectement, et qui est traversée par une pluralité de rainures (6a) pour permettre à l'air de circuler également sous les aliments.

21. Dispositif selon une ou plusieurs des revendications 18 à 20, comprenant une porte d'accès (7) dans la chambre (3) et un joint d'étanchéité hermétique (9) positionné dans la zone de butée de la porte (7) sur la structure (2) dudit dispositif, ledit dispositif (1) étant de préférence prévu avec des moyens magnétiques (8) positionnés à l'opposé de la zone de charnière de ladite porte (7) pour la maintenir fermée et comprimer ledit joint (9).

22. Dispositif selon une ou plusieurs des revendications 18 à 21, comprenant une unité de commande pouvant mettre en oeuvre le procédé selon l'une quelconque des revendications 1 à 17, ledit dispositif comprenant au moins une sonde de température à l'intérieur de la chambre (3) et une interface utilisateur (40) pour programmer ladite unité de commande.
